# EUROPEAN PATENT APPLICATION

(11) **EP 1 702 799 A1**
(43) Date of publication of application: **20.09.2006**
(21) Application number: 06251257.9
(22) Date of filing: 09.03.2006
(51) Int. Cl.: B60Q 1/54

(54) **Speed awareness system**

(30) Priority: 15.03.2005 GB 0505261
(71) Applicant: Taylor, Alan, Shropshire SY11 2PE (GB)
(72) Inventor: Taylor, Alan, Shropshire SY11 2PE (GB)
(74) Representative: Lyons, Andrew John

(57) **Abstract**

A motor vehicle (10) has a sign (14,14',14") for indicating the speed of the vehicle, visible from outside of the vehicle. Typically, the sign (14,14',14") will be on the rear of the vehicle or in the rear window of the vehicle.

## Description

This invention concerns a speed awareness system for motor vehicles.

Speeding by motorists is a constant problem, in spite of speed cameras and random police speed checks. Of course, every motor vehicle has a speedometer, so that motorists have no reason for not knowing the speed at which they are travelling. Some vehicles are now even provided with speed limiting systems that operate above a predetermined speed. These systems are useful for motorway driving but in town and cites where speed limits change frequently, such systems are of no real use.

An object of this invention is to provide a system for increasing awareness of the speed of a motor vehicle.

According to the invention it is proposed that a motor vehicle be provided with means for indicating the speed of the vehicle that is visible from outside of the vehicle.

Preferably a motor vehicle will have a sign to show the speed of the vehicle. The sign may be provided on the outside of the vehicle, such as on the rear of the vehicle. Alternatively, the sign may be within the vehicle but visible through a window thereof, especially the rear window.

The speed indicating means of the invention preferably derives its speed information from the vehicle's own speedometer. Preferably a wired connection is made between the speedometer and the speed indicating means. Alternatively a non-wired connection may be made between the speedometer and the speed indicating means.

As speedometers in different makes and models of motor vehicle operate differently, it may be necessary to calibrate the speed indicating means of the invention.

The speed indicating means may be powered by the vehicles own electrical power supply. Alternatively, a separate power supply may be provided for the speed indicating means, such as by means of a battery.

The speed indicating means is preferably an illuminated sign. The sign may be arranged to become brighter as the speed of the vehicle increases. Alternatively, the sign may become brighter when a vehicle is braking. Another variation may be to have the colour of the sign change as the speed of the vehicle moves from one range to another, such as appearing in a different colour every 10 miles or 10km per hour.

The speed indicating means may be linked to a GPS system, which has speed limit information, so that the nature of the speed indication can be altered in accordance with the actual speed limit applying to a particular section of road. For example, a motor vehicle speed that is within the speed limit might appear in one colour, such as green or yellow, and a motor vehicle speed over the speed limit might be shown in red. The speed shown that is over the speed limit may be made to flash or appear brighter.

The speed indicating means of the invention may take any suitable form. Desirably, the speed indicating means may be in the form of a thin flexible membrane that may be adhered to a window of the motor vehicle. Preferably, the membrane type speed indicating means allows visibility out of the window of the vehicle.

The speed indicating means of the invention offers the advantage that the speed of a motor vehicle is made public. This will increase both pedestrians and vehicle users of the speed of motor vehicles. Followers of a motor vehicle will also be aware of their own speed without having to take their eyes of the road. This should make for a more speed conscious environment. Also, official control and monitoring of vehicle speeds will be easier.

This invention will now be further described, by way of example, with reference to the accompanying drawings, in which:
Figure 1 is a schematic diagram illustrative of the invention;
Figure 2 shows one form of the invention; and
Figure 3 shows a second form of the invention.

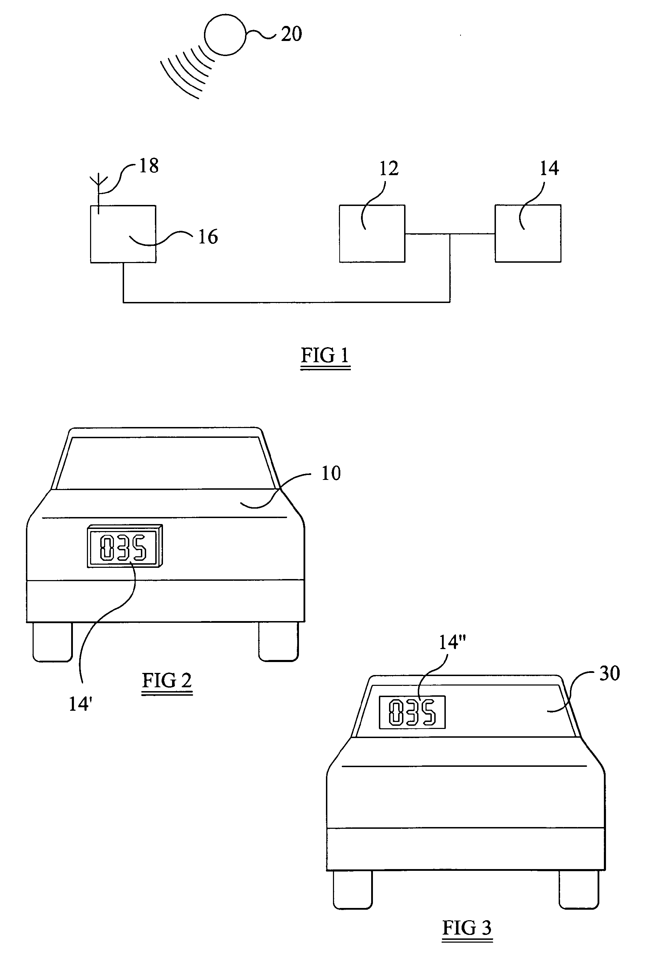

Referring to Figure 1 of the accompanying drawings, a motor vehicle has a speedometer 12 situated in its dashboard. The speedometer receives a pulsed digital signal from a speed measuring device 14 associated with a wheel or axle of the vehicle in order to display on the speedometer the speed at which the vehicle is travelling.

The signal from the speed measuring device is taken to a display device 16 mounted at the rear of the vehicle also to show the speed of the vehicle. It may be necessary to calibrate the display device, to allow for different types or frequencies of signals provided by the speed meanings device.

The display device could be mounted on the rear of the vehicle or could be mounted in the rear windscreen as shown in Figures 2 and 3 of the drawings respectively.

The display device 16 is also associated with a receiver 18 for receiving GPS signals from a source 20, in order to be able to control the display to indicate a relationship between the speed of the vehicle and the speed limit for the road on which the vehicle is moving, which is available via the GPS system. For example the speed display could be made brighter or appear in a different colour if the speed of the vehicle is above the set speed limit for the road. Additionally or alternatively an additional sign could be shown on the display device to indicate when the speed of the vehicle is in excess of the set limit for the road.

In Figure 2 of the accompanying drawings, motor vehicle 10 has a display device 14 in the form of an illuminated sign that is affixed to the outside of the rear of the vehicle but wired through to receive the signal from the speed measuring device of the vehicle.

In Figure 3 of the accompanying drawings, motor vehicle 30 has its speed display device 14 in the form of a membrane adhered to the inside of the rear window of the vehicle.

## Claims

1. A motor vehicle having means for indicating the speed of the vehicle, the speed being visible from outside of the vehicle.

2. A motor vehicle as claimed in claim 1 having a sign to show the speed of the vehicle.

3. A motor vehicle as claimed in claim 2, wherein the sign is provided on the outside of the vehicle.

4. A motor vehicle as claimed in claim 3, wherein the sign is provided on the rear of the vehicle.

5. A motor vehicle as claimed in claim 2, wherein the sign is within the vehicle but visible through a window thereof.

6. A motor vehicle as claimed in claim 5, wherein the sign is visible through a rear window of the vehicle.

7. A motor vehicle as claimed in any one of claims 1 to 6, wherein the speed indicating means derives its speed information from the vehicle's own speedometer.

8. A motor vehicle as claimed in claim 7, wherein a wired connection is made between the speedometer and the speed indicating means.

9. A motor vehicle as claimed in claim 7, wherein a non-wired connection is made between the speedometer and the speed indicating means.

10. A motor vehicle as claimed in claim 7, 8 or 9, wherein the speed indicating means is calibrated relative to the speedometer.

11. A motor vehicle as claimed in any one of claims 1 to 10, wherein the speed indicating means is powered by the vehicle's own electrical power supply.

12. A motor vehicle as claimed in any one of claims 1 to 10, wherein a power supply independent of the vehicle's own electrical power supply is provided for the speed indicating means.

13. A motor vehicle as claimed in claim 12, wherein said independent power supply comprises a battery.

14. A motor vehicle as claimed in any one of claims 1 to 13, wherein the speed indicating means is an illuminated sign.

15. A motor vehicle as claimed in claim 14, wherein the sign is arranged to become brighter as the speed of the vehicle increases.

16. A motor vehicle as claimed in claim 14, wherein the sign is arranged to become brighter when the vehicle is braking.

17. A motor vehicle as claimed in claim 14, wherein the colour of the sign is arranged to change as the speed of the vehicle moves from one range to another.

18. A motor vehicle as claimed in claim 17, wherein the sign is arranged to appear in a different colour every 10 miles or 10km per hour.

19. A motor vehicle as claimed in any one of claims 1 to 18, wherein the speed indicating means is linked to a GPS system, which has speed limit information, so that the nature of the speed indication can be altered in accordance with the actual speed limit applying to a particular section of road.

20. A motor vehicle as claimed in claim 19, wherein the motor vehicle speed that is within a prescribed speed limit is arranged to appear in one colour and a motor vehicle speed over a prescribed speed limit is shown in another colour.

21. A motor vehicle as claimed in claim 19 or 20, wherein the speed indicating means is arranged to flash when the motor vehicle speed is over a prescribed speed limit.

22. A motor vehicle as claimed in claim 19 or 20, wherein the speed indicating means is arranged to appear brighter when the motor vehicle speed is over a prescribed speed limit.

23. A motor vehicle as claimed in any one of claims 1 to 22, wherein the speed indicating means is in the form of a thin flexible membrane that may be adhered to a window of the motor vehicle.

24. A motor vehicle as claimed in claim 23, wherein the membrane type speed indicating means allows visibility out of the window of the vehicle.

25. A speed indicating means for a motor vehicle, wherein the speed is visible from outside of the vehicle.

26. Means as claimed in claim 25 comprising a sign to show the speed of the vehicle.

27. Means as claimed in claim 26, wherein the sign may be provided on the outside of the vehicle.

28. Means as claimed in claim 27, wherein the sign may be provided on the rear of the vehicle.

29. Means as claimed in claim 26, wherein the sign may be provided within the vehicle but visible through a window thereof.

30. Means as claimed in claim 29, wherein the sign is visible through a rear window of a vehicle.

31. Means as claimed in any one of claims 25 to 30, wherein the speed indicating means is arranged to derive its speed information from the vehicle's own speedometer.

32. Means as claimed in claim 31 comprising a wired connection between the speedometer and the speed indicating means.

33. Means as claimed in claim 31 comprising a non-wired connection between the speedometer and the speed indicating means.

34. Means as claimed in claim 31, 32 or 33 comprising means for calibrating the speed indicating means relative to the speedometer.

35. Means as claimed in any one of claims 25 to 34, wherein the speed indicating means is arranged to be powered by the vehicle's own electrical power supply.

36. Means as claimed in any one of claims 25 to 34 comprising a power supply independent of a vehicle's own electrical power supply for the speed indicating means.

37. Means as claimed in claim 36, wherein said independent power supply comprises a battery.

38. Means as claimed in any one of claims 25 to 37, wherein the speed indicating means comprises an illuminated sign.

39. Means as claimed in claim 38, wherein the sign is arranged to become brighter as the speed of the vehicle increases.

40. Means as claimed in claim 38, wherein the sign is arranged to become brighter when the vehicle is braking.

41. Means as claimed in claim 38, wherein the colour of the sign is arranged to change as the speed of the vehicle moves from one range to another.

42. Means as claimed in claim 41, wherein the sign is arranged to appear in a different colour every 10 miles or 10km per hour.

43. Means as claimed in any one of claims 25 to 42, wherein the speed indicating means is linked to a GPS system, which has speed limit information, so that the nature of the speed indication can be altered in accordance with the actual speed limit applying to a particular section of road.

44. Means as claimed in claim 43, wherein the motor vehicle speed that is within a prescribed speed limit is arranged to appear in one colour and a motor vehicle speed over a prescribed speed limit is shown in another colour.

45. Means as claimed in claim 43 or 44, wherein the speed indicating means is arranged to flash when the motor vehicle speed is over a prescribed speed limit.

46. Means as claimed in claim 43 or 44, wherein the speed indicating means is arranged to appear brighter when the motor vehicle speed is over a prescribed speed limit.

47. Means as claimed in any one of claims 25 to 46, wherein the speed indicating means is in the form of a thin flexible membrane that may be adhered to a window of the motor vehicle.

48. Means as claimed in claim 47, wherein the membrane type speed indicating means allows visibility out of the window of the vehicle.
